# EUROPÄISCHE PATENTSCHRIFT

(11) **EP 1 619 849 B1**
(45) Veröffentlichungstag und Bekanntmachung des Hinweises auf die Patenterteilung: **07.02.2007**
(21) Anmeldenummer: 04017035.9
(22) Anmeldetag: 19.07.2004
(51) Int. Cl.: H04L 29/06, H04L 12/18, H04L 29/08

(54) **Verfahren zum Synchronisieren eines verteilten Systems**
Method for synchronising a distributed system
Procédé de synchronisation d'un système distribué

(43) Veröffentlichungstag der Anmeldung: 25.01.2006
(73) Patentinhaber: SIEMENS AKTIENGESELLSCHAFT, 80333 München (DE)
(72) Erfinder: Jekal, Mirko, 21255 Tostedt (DE); Schreiber, Gerald, Dr., 21465 Wentorf (DE); Steinbrück, Christoph, 21079 Hamburg (DE); von der Heide, Stefan, 22846 Norderstedt (DE)

(56) Entgegenhaltungen:
- US-A1- 2003 018 732
- US-A1- 2003 055 873
- US-A1- 2003 105 805
- US-A1- 2004 103 195

## Beschreibung

Die vorliegende Erfindung bezieht sich auf die Synchronisierung eines verteilten Systems und insbesondere auf die Verteilung von Daten sowie den Zugriff auf Ressourcen in verteilten Systemen.

Um komplexe rechentechnische Aufgaben zu bewältigen und/oder um in Datenverarbeitungsanlagen Sicherheit durch Redundanz zu schaffen, werden häufig Anlagen eingesetzt, die aus einer Mehrzahl einzelner Automaten bzw. Rechenmaschinen oder Rechnersystemen zusammengesetzt sind, die sich einem Nutzer der Anlage jedoch transparent als eine einzige Anlage präsentieren. Solche Anlagen bezeichnet man auch als verteilte Systeme, in denen beispielsweise Vorgänge oder Maßnahmen wie Speicherredundanz oder Load Balancing bzw. Lastteilung vorzugsweise transparent, d.h. nicht wahrnehmbar, für den Nutzer gestaltet sind. Verteilte Systeme unterscheiden sich von Netzwerken beispielsweise darin, daß sich in Netzwerken die einzelnen Rechenmaschinen des Netzwerks dem Nutzer als getrennte Entitäten präsentieren, wobei in Netzwerken Speicherredundanz oder Load Balancing häufig nicht transparent, also wahrnehmbar, für den Nutzer gestaltet sind und häufig sogar der Nutzerinteraktion bedürfen.

In verteilten Systemen müssen Daten zwischen den einzelnen Rechenmaschinen oder Systemen verteilt werden, siehe beispielsweise die Patent anmeldungen US 2003/105805 und US 2003/055873. Für diese Datenverteilung sind mehrere Möglichkeiten bekannt. Generell sind dabei die relativ langsame, transaktionsgesicherte Datenübertragung einerseits und die schnellere, relativ ungesicherter Verteilung mit geringem Aufwand andererseits zu unterscheiden.

Wenn sich im Fall der transaktionsgesicherten Datenübertragung die Transaktionssicherung bis zur Nutzerschnittstelle erstreckt, kann eine vollständige Datenkonsistenz zu jedem Zeitpunkt sichergestellt werden, etwa indem der Nutzer erst dann eine Rückmeldung erhält, wenn eine Eingabe gesichert im System verteilt wurde. Dies ist jedoch ein relativ langwieriger Vorgang mit hohem Kommunikationsanteil, insbesondere in Fällen, in denen die Daten auf viele Maschinen verteilt werden müssen. Während lange Reaktionszeiten generell unerwünscht sind, gibt es eine Reihe von Anwendungen, in denen lange Reaktionszeiten vermieden werden müssen, beispielsweise sicherheitskritische Anwendungen. Ferner sind transaktionsgesicherte Systeme aufwendig zu realisieren und teuer.

Wird andererseits vom Prinzip der vollständigen Transaktionssicherung abgewichen, beispielsweise indem eine Rückmeldung bereits dann erfolgt, wenn die Eingabe an nur eine andere Maschiene bzw. ein anderes System weitergegeben werden konnte, besteht die Gefahr inkonsistenter Zustände im System. Diese inkonsistenten Zustände können einen Datenverlust nach sich ziehen, etwa wenn Systemseparationen aufgrund von Verbindungsprobremen auftreten oder gerade diejenigen Maschinen oder Teilsysteme ausfallen, welche die Eingabedaten empfangen haben. In Folge könnte einem Nutzer die Verarbeitung seiner Eingabe signalisiert worden sein, während diese Eingabe im System verloren gegangen ist, was jedoch speziell in sicherheitskritischen Umgebungen nicht auftreten darf.

Als Beispiel wird ein ausgelöster Notruf betrachtet, bei dem einem notrufenden Nutzer ein erfolgreich abgesetzten Notruf beispielsweise durch eine Anzeige bestätigt wird, welcher letztlich aber nicht weiter verarbeitet wird.

Es ist daher Aufgabe der vorliegenden Erfindung, ein alternatives Übertragungsverfahren für verteilte Systeme sowie ein alternatives verteiltes System anzugeben, wodurch die Sicherheit einer vollständigen Transaktionssicherung mit geringerem Aufwand erreicht wird.

Diese Aufgabe wird gelöst durch ein Verfahren gemäß Anspruch 1 zum Synchronisieren von Komponenten eines verteilten Systems, demgemäß der Systemstatus durch mindestens ein Objekt repräsentiert wird, das in allen Komponenten vorgesehen wird, wobei ein Wechsel des Status des Objekts in einer der Komponenten mittels Statuswechselnachricht an alle anderen Komponenten signalisiert wird, woraufhin durch jede der anderen Komponenten die lokale Gültigkeit des signalisierten Statuswechsels geprüft wird, wobei bei lokal gültigem Statuswechsel der Status der Objekte in diesen Komponenten aktualisiert wird und wobei bei lokal ungültigem Statuswechsel eine Komponente mit gültigem Status des Objekts ermittelt wird, welcher zumindest an die Komponenten mit ungültigem Status des Objekts gesendet wird, woraufhin der Status der Objekte in diesen Komponenten aktualisiert wird.

Die Erfindung betrifft ferner ein verteiltes System gemäß Anspruch 7, dessen Komponenten zum Ausführen des erfindungsgemäßen Verfahrens ausgestaltet sind.

Gegenüber den bekannten verteilten Systemen bietet die vorliegende Erfindung den Vorteil, daß zur Übertragung der Statuswechselnachrichten, die benötigt werden, um die Systemsynchronität aufrecht zu erhalten oder wiederherzustellen, ungesicherte und damit schnelle Übertragungsverfahren eingesetzt werden können, beispielsweise UDP/IP (für: User Datagram Protocol / Internet Protocol) Multicast Nachrichten. Dabei wird unterstellt, daß diese Nachrichten im Regelfall auch ihr Ziel erreichen und das System allein durch diese Nachrichten synchron bleibt. Kommt es allerdings zu Störungen, ist jede Komponente spätestens mit der nächsten empfangenen Statuswechselnachricht oder bei längeren Pausen in der Nachrichtenübertragung durch den verwendeten Überwachungsmechanismus in der Lage, die - ggf. lokale - Unterbrechung der Synchronität festzustellen und bei einer Komponente mit korrektem Status diesen anzufordern. Der Systemstatus wird dabei durch ein oder mehrere Objekte vollständig abgebildet. Mehrere geeignet abgegrenzte Objekte bieten dabei den Vorteil, daß die bei einem Statuswechsel eines der Objekte anfallende Datenmenge geringer ist.

Mit anderen Worten erreicht die vorliegende Erfindung ein schwach gekoppeltes verteiltes System, in dem der ungestörte Regelbetrieb schneller abläuft als in vollständig transaktionsgesicherten Systemen, während gleichzeitig die Sicherheit eines vollständig transaktionsgesicherten Systems gewährleistet ist.

Dabei ist es erfindungsgemäß nicht notwendig, Informationen zum Systemstatus bzw. zum Status der Objekte in ausgewählten zentralen Komponenten, z.B. Servern oder Datenbanken vorzuhalten, welche einen sogenannten Single Point of Failure bilden würden. Vielmehr wird im Fehlerfall eine Komponente ermittelt, welche über einen gültigen Status verfügt, der dann für Komponenten mit ungültigem Objektstatus verwendet wird. Ein durch zentrale Komponenten stets bedingter "Single Point of Failure", der die Verfügbarkeit des Systems nachteilig beeinflusst, ist gemäß der Erfindung nicht erforderlich.

Die vorliegende Erfindung liefert gleichermaßen einen Mechanismus zur Auflösung von konkurrierenden Zugriffen auf exklusive Ressourcen. Bei solchen konkurrierenden Zugriffen ist es erforderlich, einen konsistenten bzw. synchronen Systemzustand einzustellen, wenn zwei oder mehr Instanzen gleichzeitig oder zeitnah eine exklusive Ressource manipulieren bzw. dies versuchen. Auch hier kann ein inkonsistenter Zustand durch die vorliegende Erfindung verhindert oder behoben werden.

In vielen Anwendungsfällen kann ein erfindungsgemäßes verteiltes System vorteilhaft eine gesonderte Datenbank sowie einen Transportmechanismus für verteiltes Arbeiten (z.B. CORBA) ersetzen. Vorteile bietet ein solches System auch in Umgebungen, wo zeitweise Netztrennungen (separierte Teilnetze) mit folgender Wieder-Zusammenführung auftreten. Hier pegelt sich das System - für den Nutzer in der Regel unmerklich - wieder auf einen gemeinsamen Zustand ein.

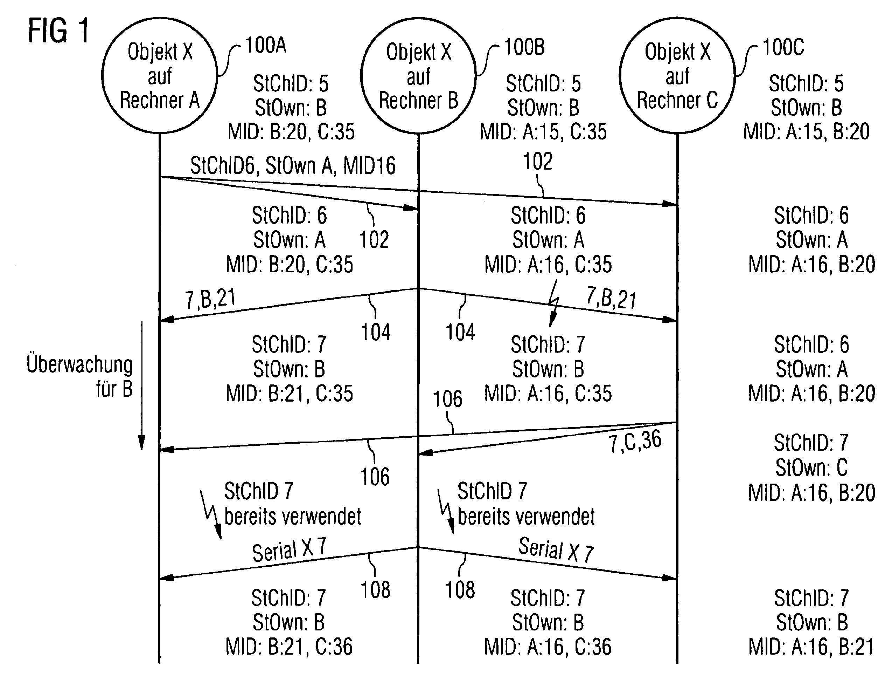

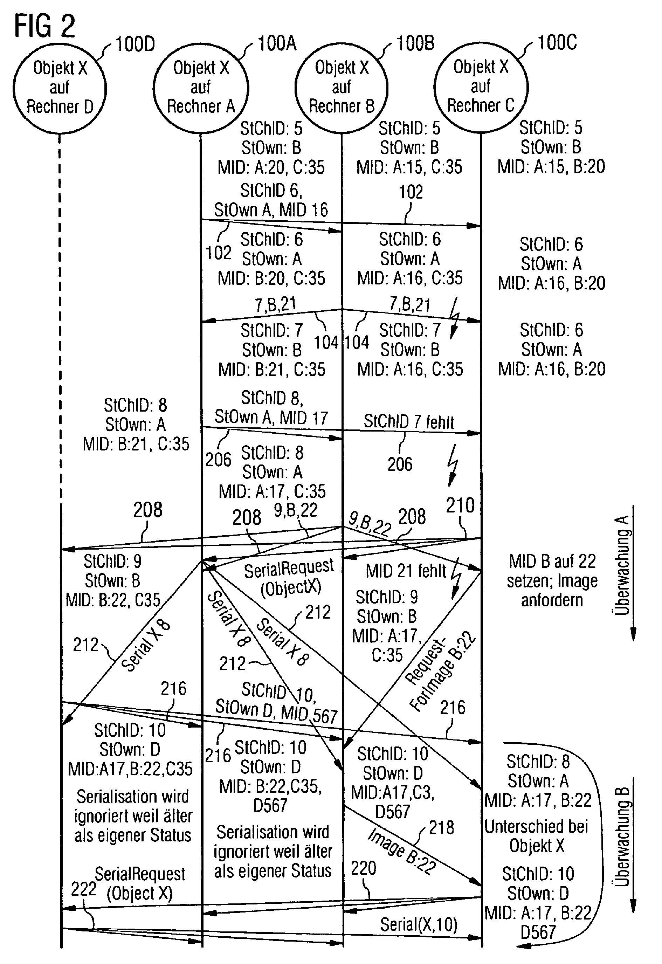

Im folgenden wird die Erfindung in Ausführungsbeispielen anhand von Zeichnung näher erläutert. Figuren 1 und 2 zeigen in schematischer Darstellung den Ablauf der statusbezogenen Kommunikation in einem schwach gekoppelten System mit mehreren Komponenten im Zusammenhang mit der Behandlung eines Übertragungsfehlers.

Fig. 1 zeigt in schematischer Darstellung den Kommunikationsverlauf bezüglich eines Objekts X, welches auf drei Komponenten A, B, C eines schwach gekoppelten Systems abgebildet ist. Diese Objektabbildung ist dargestellt durch Kreise 100A, 100B, 100C jeweils für die drei Rechner oder Rechnersysteme A, B, C.

Es sei angenommen, daß alle drei Rechner A, B, C zunächst für das Objekt X den gleichen Status gespeichert haben, mithin also bezüglich des Objekts X synchron arbeiten. Der Status wird charakterisiert durch den sogenannten Statusbesitzer bzw. Statusowner (StOwn) und die Kennung der letzten Statuswechselnachricht (StChID). Diese beiden Parameter sind in allen Rechnern gespeichert und systemweit gleich, solange das System synchron arbeitet. Ferner werden in jedem Rechner weitere Nachrichtenkennungen (MID) aller anderen Rechner gespeichert, in Rechner A also weitere Nachrichtenkennungen der Rechner B und C, in Rechner B weitere Nachrichtenkennungen der Rechner A und C und in Rechner C weitere Nachrichtenkennungen der Rechner A und B.

Als Statusbesitzer wird der Rechner bezeichnet, bei dem der letzte Statuswechsel stattgefunden hat und der in Folge diesen Statuswechsel an die anderen Rechner mittels Statuswechselnachricht kommuniziert hat. Im vorliegenden Fall gilt: StOwn = B, d.h. Rechner B ist der Statusowner des letzten Statuswechsels, welcher die Kennung StChID = 5 trägt. Die letzte von A ausgesendete Nachricht trug die MID 15, die letzte von B ausgesendete Nachricht trug die MID 20, und die letzte von C ausgesendete Nachricht trug die MID 35, wodurch sich der in Fig. 1 dargestellte Anfangsstatus bezüglich der mit den Statuswechselnachrichten assoziierten Kennungen ergibt.

Aufgrund eines Statuswechsels überträgt Rechner A an alle anderen Komponenten, d.h. an Rechner B und C, anschließend eine Statuswechselnachricht 102, welche die Kennung StChID = 6 (alte StChID plus 1) trägt. Statusbesitzer ist nunmehr Rechner A, da von diesem der Statuswechsel ausgeht. Die MID für A wird ebenfalls inkrementiert und mit der Statuswechselnachricht übertragen und beträgt nunmehr 16.

Die Nachricht 102 wird von allen anderen Komponenten korrekt empfangen. Die Kennungen StChID und MID werden mit den lokal gespeicherten Werten verglichen, und es wird festgestellt, daß der bisherige lokale Status bei B und C gültig war, da die empfangenen Werte für StChID und MID gerade den um 1 inkrementierten lokalen Werten entsprechen. Ferner folgt aus der Tatsache, daß A die korrekten StChID und MID verwendet hat, daß auch der Status beim Rechner A gültig ist. Rechner B und C aktualisieren daraufhin den Status des Objekts X, welcher dann wiederum für alle Rechner identisch ist, mit den Parametern StChID = 6, StOwn = A und MID A:16, B:20, C:35.

Allgemeiner ausgedrückt, verhält sich das System im vorstehend beschriebenen störungsfreien Betrieb wie folgt:

Alle Objekte, die einen Teil des Systemstatus repräsentieren, werden grundsätzlich auf jedem der beteiligten Rechner erzeugt. Damit werden sämtliche systemstatusbehafteten Objekte global repliziert. Jede Änderung eines Status wird per Multicast-Nachricht versendet und so von allen Komponenten bzw. Rechnern A, B, C empfangen. Einer solchen Nachricht werden der objektlokale Parameter StChID, der Parameter StOwn und der rechnerlokale bzw. komponentenlokale Parameter MID hinzugefügt.

Mit dem Parameter StChID können Konflikte, hervorgerufen durch gleichzeitigen Statuswechsel oder zeitweilige Netztrennung, erkannt werden. Anhand des rechnerlokalen Parameters MID können zeitweilige Netztrennungen erkannt werden. Gleichzeitig kann dieser Parameter regelmäßig durch einen aktiven Ping-Mechanismus zwischen den beteiligten Rechnern überwacht werden, wobei der Ping-Mechanismus so ausgestaltet sein kann, daß nur dann Pings ausgetauscht werden, wenn keine anderen Nachrichten dieses Rechners empfangen wurden. Wenn keiner der Überwachungsmechanismen einen Fehler meldet, ist damit die Propagierung des Statuswechsels durch das einfache Aussenden der (Multicast-) Nachricht beendet.

Wieder mit Bezug auf Fig. 1 überträgt Rechner B an alle anderen Komponenten, d.h. an Rechner A und C, aufgrund eines Statuswechsels eine Statuswechselnachricht 104, welche die Kennung StChID = 7 (alte StChID plus 1) trägt. Statusbesitzer ist nunmehr Rechner B, da von diesem der Statuswechsel ausgeht. Die MID für B wird ebenfalls inkrementiert und mit der Statuswechselnachricht übertragen und beträgt nunmehr 21.

Die Nachricht 104 wird von A korrekt empfangen. Rechner A führt wiederum die o.g. Überprüfungen durch und aktualisiert schließlich den lokalen Status, der dann durch die Parameter StChID = 7, StOwn = B und MID A:16, B:21, C:35 charakterisiert ist.

Aufgrund einer Kommunikationsstörung wird die Nachricht 104 wird von Rechner C nicht oder nicht korrekt empfangen. Rechner C führt keine Aktion aus und verbleibt im bislang gültigen Status, der - wie oben - durch die Parameter StChID = 6, StOwn = A und MID A:16, B:20, C:35 charakterisiert ist.

Das verteilte System ist ab diesem Moment nicht mehr synchron, was jedoch nicht unmittelbar festgestellt wird. Die Fehlererkennung erfolgt im Beispiel der Fig. 1 anhand der nächsten Statuswechselnachricht, kann aber auch durch den erwähnten Ping-Mechanismus erfolgen. Die Fehlererkennung durch Ping kann erfolgen, indem B Pings an A und C mit der letzten gültigen MID aussendet, woraufhin C eine Abweichung feststellt und damit den lokalen Status als ungültig erkennt, woraufhin eine Fehlerbehandlung im Sinne von Fig. 2 stattfindet.

Erfolgt die Fehlererkennung im System anhand der nächsten Statuswechselnachricht, können zwei Fälle unterschieden werden: C sendet eine Statuswechselnachricht, und A und B erkennen das Problem (dargestellt in Fig. 1, im folgenden beschrieben), oder A oder B sendet eine Statuswechselnachricht, und C erkennt das Problem (dargestellt und beschrieben in Zusammenhang mit Fig. 2).

Aufgrund eines Statuswechsels sendet Rechner C eine Statuswechselnachricht 106 an alle anderen Komponenten, d.h. an Rechner A und B. Da der lokale Status des Objekts X im Rechner C nicht dem aktuellen Status entspricht, verwendet C eine - aus Sicht von A und B - veraltete Statuswechselnachricht-Kennung StChID = 7. Der Status von C wird durch A und B als ungültig erkannt, da von C eine StChID = 8 erwartet wurde.

Wird ein Fehler erkannt, wird eine Konfliktauflösung durchgeführt. Dabei wird anhand der Parameter StOwn, StChID oder/und vorgebbarer Prioritäten festgestellt, durch welche Komponente der wahre Status festgelegt wird. Bei gleichen Rechten kann die Komponente anhand des Minimums einer allgemein bekannten vergleichbaren Eigenschaft zum tatsächlichen Statusowner (z.B. anhand der Netzwerkadresse) bestimmt werden. Da alle für die Entscheidung benötigten Daten global vorliegen, kann die Entscheidung ohne zusätzliche Kommunikation getroffen werden.

Im Beispiel der Fig. 1 sei angenommen, daß der Parameter StOwn ausschlaggebend für die Festlegung der den wahren Status bestimmenden Komponente ist, d.h. es wird Rechner B als die Komponente gewählt, bei der der letzte Statuswechsel (mit StChID = 7) aufgetreten ist. Von dieser gewählten Komponente wird das komplette Objekt zumindest an die Komponente mit ungültigem lokalen Status, also Rechner C, übertragen (Schritt 108) und kann parallel auch an alle anderen Komponenten übertragen werden. Die Übertragung des Objekts X mit dem Status StChID = 7 erfolgt serialisiert mittels Multicast (Serial X 7). Werden nur die Komponenten mit ungültigem lokalen Status mit dem Objekt X neu versorgt, kann anstelle Multicast auch eine transaktionsgesicherte Übertragung gewählt werden, um sicherzustellen, daß das Objektabbild vollständig fehlerfrei übertragen wurde.

Nach dieser Fehlerbehebung verfügen alle Komponenten A, B, C wieder über einen einheitlichen Status bezüglich des Objekts X, charakterisiert durch die Parameter StChID = 7, StOwn = B und MID A:16, B:21, C:36.

In Fig. 2 wird ausgehend von der gleichen Situation wie in Fig. 1 (A und B haben StChID = 7, C hat wegen eines Fehlers StChID = 6) der Fall dargestellt, in dem die Inkonsistenz bei Komponente C festgestellt wird, wobei die Fehlerbehebung durch parallele Ereignisse mehr Schritte in Anspruch nimmt als im Beispiel der Fig. 1.

Nachdem Komponente B im Schritt 104 einen neuen Status übertragen hat (mit StChID = 7), findet ein Statuswechsel bei A statt, welcher von A an die anderen Komponenten, d.h. an die Rechner B und C, übertragen wird (Schritt 206). Hierzu werden die Statuswechselnachrichtenparameter StChID = 8, StOwn = A und MID = 17 verwendet. Beim Eintreffen der StChID = 8 in der empfangenen Statuswechselnachricht stellt C fest, daß eine Statuswechselnachricht mit StChID = 7 durch C nicht empfangen wurde und daher der lokale Status bei C ungültig ist. C fordert deshalb per Broadcast (d.h. an alle Komponenten inklusive einer zur Vereinfachung bislang nicht näher betrachteten Komponente D) mittels Nachricht 210 ein aktuelles Abbild des Objekts an und startet einen Überwachungstimer zur Überwachung des Abbildempfangs von A. Zuvor hatte jedoch B bereits einen weiteren Statuswechsel mittels Statuswechselnachricht 208 (StChID = 9, StOwn = B, MID = 9) an alle anderen Komponenten signalisiert.

Die Statuswechselnachricht 208 wird von C empfangen, woraufhin C feststellt, daß eine Nachricht von B verlorengegangen ist, denn die lokale MID für B beträgt 20, während die in der empfangenen Nachricht enthaltene 22 lautet. Bei Abweichung einer MID vom erwarteten Wert wird kein Broadcast an alle anderen Komponenten gesendet, sondern es wird von der Partnerkomponente, deren MID Abweichungen zeigt, eine Komplettliste aller Statuswechselnachrichten-Kennungen StChID angefordert (Schritt 214), die empfangen wird (Schritt 218) und anhand derer ermittelt wird, für welche Objekte ein aktualisiertes Abbild anzufordern ist. Für diese Objekte wird das Abbild dann per Broadcast angefordert, Schritt 220.

Im Fall der Fig. 2 wurde nach dem Empfang der Statuswechselnachricht 208 das angeforderte Abbild des Objekts X von A an C (und optional auch an alle anderen Komponenten) mit Status-ID 8 übertragen (Schritt 212), wobei vor dem vollständigen Empfang dieses Abbilds bei C ein weiterer Statuswechsel, ausgelöst durch D (Schritt 216) empfangen wurde. Dieser Statuswechsel 216 wird gemeinsam mit dem Statuswechsel 208 bei C zwischengespeichert, um das empfangene Abbild anpassen zu können. Dies wäre hier erforderlich, da das Abbild vom Status 8 ist, die Nachricht 208 vom Status 9 und die Nachricht 216 vom Status 10. Allerdings wurde mit Nachrichten 214 und 218 die genannte Liste der StChID angefordert und erhalten, und es wird ein neues Objektabbild per Broadcast angefordert, Schritt 220. Dieser Broadcast wird von D beantwortet (Schritt 222), da Komponente D der aktuelle Statusbesitzer ist. Die StChID dieses Objektabbilds wird mit den zwischengespeicherten Statusänderungsnachrichten und deren Kennungen StChID verglichen, und es werden alle zwischengespeicherten Statusänderungsnachrichten verworfen, deren StChID kleiner oder gleich der StChID des Abbilds ist.

Nach dieser Fehlerbehebung verfügen alle Komponenten A, B, C, D wieder über einen einheitlichen Status bezüglich des Objekts X, charakterisiert durch die Parameter StChID = 10, StOwn = D und MID A:17, B:22, C:35, D:567.

Es sei darauf hingewiesen, daß bei Anforderungen von Objektabbildern durch Komponenten, die einen ungültigen lokalen Status erkannt haben, wie bereits erwähnt ein Timer gestartet wird, innerhalb dessen das Objektabbild vom Statusbesitzer der letzten Statuswechselnachricht (anhand derer der Fehler erkannt wurde) erwartet wird. Wird dieses nicht gesendet, übernimmt die Komponente mit der nächstniedrigeren Priorität diese Aufgabe. Dies erfordert vorteilhaft keine zusätzliche Anforderung, falls Objektabbilder per Broadcast an alle Komponenten gesendet werden, denn so stellt die Komponente mit der nächstniedrigeren Priorität das Ausbleiben des Objektabbilds vom eigentlichen Statusbesitzer fest.

Alternativ kann der Ping-Mechanismus genutzt werden, um den Ausfall eines Statusbesitzers zu detektieren und bereits vor Ablauf des Timers das Abbild des Objekts an die Komponente mit ungültigen lokalen Status zu senden.

Die maximale Verzögerung, mit der das schwach gekoppelte verteilte System gemäß der vorliegenden Erfindung eine Re-Synchronisation ausführt, ist abhängig vom Wert des Überwachungstimers. Diese Verzögerung macht sich jedoch nur im Fehlerfall störend bemerkbar, so daß Transportnetzwerke des Standes der Technik, die auch bei ungesicherter Übertragung eine sehr geringe Fehlerquote aufweisen, insgesamt eine schnellere Nachrichtenübertragung mittels einfacher, unbestätigter Multicast-Nachricht im Zusammenhang mit der Erfindung ermöglichen, wobei gleichzeitig nach Ablauf der konfigurierten Zeit des Überwachungstimers die hohe Sicherheit eines vollständig transaktionsgesicherten Systems erreicht wird.

Zur Ausführung der vorliegenden Erfindung können beliebige Multicast-Mechanismen eingesetzt werden, sofern mit Multicast-Nachrichten alle Komponenten erreicht werden können. Wird als bevorzugtes Transportprotokoll beispielsweise das Internetprotokoll IP eingesetzt und als Multicast-Protokoll das User Datagram Protocol UDP, muss beispielsweise sichergestellt sein, daß alle Komponenten adressierbar sind, d.h., falls die Komponenten in verschiedenen IP Netzen liegen, müssen beispielsweise Router eingesetzt und entsprechend konfiguriert werden.

Zur Darstellung von Geräten, die von sich aus keine Multicast-Mechanismen zur Statusmeldung oder eine Steuerung von beliebig vielen Quellen unterstützen, kann ein repräsentatives Objekt genutzt werden. Dieses repräsentative Objekt verhält sich grundsätzlich wie die oben beschriebenen Objekte. Für den direkten Zugriff auf das repräsentierte Gerät wird jedoch ein Objekt auf einem ausgesuchten Rechner (als Repräsentator des Gerätes) bestimmt, welches die tatsächliche Kommunikation mit dem Gerät übernimmt. Zur Bestimmung dieses Objektes werden die oben beschriebenen Mechanismen verwendet, d.h. nach dem Minimum von einer global bekannten Rechnereigenschaft erkennt eines der Objekte sich selbst als repräsentatives Objekt und setzt ein Attribut mit seiner Rechneradresse, um den anderen Objekten dies mitzuteilen. Sollten sich mehrere Objekte gleichzeitig zum repräsentativen Objekt erklären, wird dieser Zustand durch die Konfliktauflösung wie oben wieder aufgelöst. Damit sichergestellt ist, daß es immer ein repräsentatives Objekt für ein Gerät gibt, kann die Überwachungsfunktion dahingehend erweitert werden, daß bei Feststellung eines Rechnerausfalles sämtliche Objekte das jetzt ungültige Attribut des repräsentativen Rechners zurücksetzen. Danach übernimmt wieder jeweils ein anderes repräsentatives Objekt nach dem bekannten Algorithmus die Zuständigkeit. Empfängt das repräsentative Objekt (Status-) Meldungen von dem dargestellten Gerät, ändert es seinen Status entsprechend. Dieses wird wieder automatisch auf alle Rechner des Netzwerkes übertragen.

Natürlich können zur Auswahl eines konfliktauflösenden Objektes bzw. zur Wahl eines repräsentativen Objektes andere Algorithmen statt des beispielhaft beschriebenen Bestimmens eines Minimums genutzt werden. So kann mittels geeigneter Algorithmen eine Lastverteilung für diese aktiven Objekte und deren jeweiligen Repräsentation auf den beteiligten Rechnern bewirkt werden.

Zu Implementierung der vorliegenden Erfindung können bekannte programmiertechnischer Eigenschaften zur Vereinfachung der Realisierung eines so beschreibbaren Systems angewendet werden. Hierzu zählt insbesondere die Verwendung von Reflexions-Mechanismen zur einfachen Implementierung der Informationsverteilung, Konflikterkennung und Überwachung der Konfliktauflösung in Basisklassen, welche die höheren Schichten der Realisierung weitgehend von der Implementierung der angegebenen Mechanismen befreit.

Das System gemäß der vorliegenden Erfindung eignet sich besonders für Anwendungen, in denen mehrere Datenverbraucher, sogenannte Consumer (z.B. Operatorenarbeitsplätze) mit Informationen eines Datenerzeugers bzw. Producers (z.B. Sensorik) gleichzeitig ohne unnötige zusätzliche Belastung der Kommunikationssysteme versorgt werden müssen. Dies ist besonders wichtig bei vielen Datenerzeugern und/oder bei Datenerzeugern, die große Mengen an Daten generieren. Ein wichtiges Beispiel hierfür sind Überwachungssysteme mit mehreren, auch räumlich getrennten Operatorarbeitsplätzen und einer Vielfalt unterschiedlichster Datenerzeuger wie Videoquellen, Berührungssensoren, Annäherungssensoren, Feuchtigkeitssensoren, Rauchmeldern usw.

## Patentansprüche

1. Verfahren zum Synchronisieren von Komponenten (A, B, C, D) eines verteilten Systems, demgemäß der Systemstatus durch mindestens ein Objekt (X) repräsentiert wird, das in allen Komponenten (A, B, C, D) vorgesehen wird, wobei ein Wechsel des Status des Objekts (X) in einer der Komponenten mittels Statuswechselnachricht (102, 10.4, 106) an alle anderen Komponenten signalisiert wird, woraufhin durch jede der anderen Komponenten die lokale Gültigkeit des signalisierten Statuswechsels geprüft wird, wobei bei lokal gültigem Statuswechsel der Status der Objekte in diesen Komponenten aktualisiert wird und wobei bei lokal ungültigem Statuswechsel eine Komponente mit gültigem Status des Objekts (X) ermittelt wird, welcher zumindest an die Komponenten mit ungültigem Status des Objekts (X) gesendet wird, woraufhin der Status der Objekte in diesen Komponenten aktualisiert wird.

2. Verfahren nach Anspruch 1, **dadurch gekennzeichnet, daß** die Statuswechselnachrichten (102, 104, 106) mittels ungesichertem Multicast übertragen werden.

3. Verfahren nach einem der Ansprüche 1 oder 2, **dadurch gekennzeichnet, daß** jeder Statuswechselnachricht (102, 104, 106) zumindest eine fortlaufende Statuswechselnachricht-Kennung (StChID), eine Kennung der statuswechselnden Komponente (StOwn) und eine lokale Nachrichtenkennung (MID) der sendenden Komponente zugeordnet wird.

4. Verfahren nach Anspruch 3, **dadurch gekennzeichnet, daß**
- alle eine Statuswechselnachricht empfangenden Komponenten eine jeweils lokale Statuswechselnachricht-Kennung (StChID), die der Statuswechselnachricht-Kennung (StChID) der letzten bei der jeweiligen Komponenten empfangenen oder gesendeten Statuswechselnachricht entspricht, mit der Statuswechselnachricht-Kennung (StChID) der empfangenen Statuswechselnachricht (102, 104, 106) vergleichen, um die lokale Gültigkeit des signalisierten Statuswechsels zu prüfen, und
- bei Ungleichheit eine statusbestimmende Komponente ermittelt wird, durch welche der Status des Objekts (X) aller anderen Komponenten neu festgelegt wird.

5. Verfahren nach Anspruch 4, **dadurch gekennzeichnet, daß** die statusbestimmende Komponente aus der Kennung der statuswechselnden Komponente (StOwn), der Statuswechselnachricht-Kennung (StChID) und einer den Komponenten zugeordneten Priorität ermittelt wird.

6. Verfahren nach einem der Ansprüche 4 oder 5, **dadurch gekennzeichnet, daß** durch Komponenten, bei denen aus dem Vergleich festgestellt wird, daß der lokale Status des Objekts (X) nicht dem aktuellen Status entspricht, eine Kopie des gesamten Objekts (X) bei der die Statuswechselnachricht aussendenden Komponente angefordert wird.

7. Verteiltes System, bestehend aus Komponenten (A, B, C, D), dessen Status durch mindestens ein Objekt (X) repräsentiert ist, das in allen Komponenten (A, B, C, D) vorhanden ist, wobei jede Komponente folgendes aufweist:
- Mittel zum Signalisieren eines Wechsels des Status des Objekts (X) an alle anderen Komponenten mittels Statuswechselnachricht (102, 104, 106);
- Mittel zum Überprüfen der lokalen Gültigkeit des signalisierten Statuswechsels;
- Mittel zum Aktualisieren des Status des Objekts (X) ansprechend auf den Empfang einer lokal gültigen Statuswechselnachricht (102, 104, 106); und
- Mittel zum Ermitteln einer Komponente mit gültigem Status des Objekts (X) sowie Mittel zum Empfang des Status des Objekts (X) von dieser Komponente ansprechend auf den Empfang einer lokal ungültigen Statuswechselnachricht.

8. System nach Anspruch 7, bei dem die Mittel zum Signalisieren des Wechsels des Status des Objekts (X) Mittel zum Übertragen der Statuswechselnachrichten (102, 104, 106) mittels ungesichertem Multicast umfassen.

9. System nach einem der Ansprüche 7 oder 8, bei dem die Mittel zum Signalisieren des Wechsels des Status des Objekts (X) Mittel zum Erzeugen von Statuswechselnachrichten (102, 104, 106) umfassen, welchen zumindest eine fortlaufende Statuswechselnachricht-Kennung (StChID), eine Kennung der statuswechselnden Komponente (StOwn) und eine lokale Nachrichtenkennung (MID) der sendenden Komponente zugeordnet ist.

10. System nach Anspruch 9, dessen Komponenten (A, B, C, D) zusätzlich folgendes aufweisen:
- Mittel zum Speichern einer jeweils lokalen Statuswechselnachricht-Kennung (StChID), die der Statuswechselnachricht-Kennung (StChID) der letzten bei der jeweiligen Komponente empfangenen oder gesendeten Statuswechselnachricht entspricht;
- Mittel zum Vergleichen der lokalen Statuswechselnachricht-Kennung (StChID) mit der Statuswechselnachricht-Kennung (StChID) einer empfangenen Statuswechselnachricht (102, 104, 106), um die lokale Gültigkeit des signalisierten Statuswechsels zu prüfen; und
- Mittel zum Ermitteln einer statusbestimmenden Komponente bei Ungleichheit sowie Mittel zum Neufestlegen des Status des Objekts (X) aller anderen Komponenten durch die ermittelte Komponente.

11. System nach Anspruch 10, bei dem die Mittel zum Ermitteln einer statusbestimmenden Komponente bei Ungleichheit Mittel zum Auswerten folgender Parameter aufweisen: Kennung der statuswechselnden Komponente (StOwn), Statuswechselnachricht-Kennung (StChID) und eine den Komponenten zugeordneten Priorität.

12. System nach einem der Ansprüche 9 oder 10, dessen Komponenten (A, B, C, D) zusätzlich Mittel zum Anfordern einer Kopie des gesamten Objekts (X) bei der die Statuswechselnachricht aussendenden Komponente ansprechend auf das Feststellen einer Abweichung des lokalen Status vom systemweiten Status des Objekts (X) aufweisen.

13. System nach einem der Ansprüchen 7 bis 12, wobei das Objekt (X) stellvertretend für eine der Komponenten wirkt und diese Stellvertretereigenschaft des Objektes (X) durch ein zusätzliches Attribut dargestellt wird.

## Claims

1. Method for synchronization of components (A, B, C, D) of a distributed system, according to which the system status is represented by at least one object (X) which is provided in all components (A, B, C, D), with a change of the status of the object (X) in one of the components being signalled by means of a status change message (102, 104, 106) to all other components, whereon the local validity of the status change signalled is checked by each of the other components, whereby, if the status change is locally valid, the status of the objects is updated in these components and whereby, if the status change is locally invalid, a component with a valid status of the object (X) is determined, which is sent at least to the components with invalid status of the object (X), whereon the status of the objects is updated in these components.

2. Method according to claim 1, **characterized in that** the status change messages (102, 104, 106) are transmitted by means of unsecured multicasts.

3. Method according to one of the claims 1 or 2, **characterized in that** each status change message (102, 104, 106) is assigned at least one consecutive status change message id. (StChID), an identifier of the status changing component (StOwn) and a local message identifier (MID) of the sending component

4. Method according to claim 3, **characterized in that**,
- all components receiving a status change message compare a local status change message identifier (StChID) which corresponds to the status change message identifier (StChID) of the last status change message received at or sent from the relevant component, to the status change message identifier (StChID) of the received status change message 104, 106), in order to check the local validity of the status change signalled, and
- on inequality, a status-defining component is determined by which the status of the object (X) of all other components is newly determined.

5. Method according to claim 4, **characterized in that** the status-defining component is determined from the identifier of the status-changing component (StOwn), the status change message indentifier (StChID) and a priority assigned to the components.

6. Method according to one of the claims 4 or 5, **characterized in that** a copy of the entire object (X) is requested at the component sending the status change message by components at which it was established from the comparison that the local status of the object (X) does not match the current status.

7. Distributed system, consisting of components (A, B, C, D), of which the status is represented by at least one object (X) which is present in all components (A, B, C, D), with each component having the following features:
- Means for signalling a change of the status of the object (X) to all other components by means of a status change message (102, 104, 106);
- Means for checking the local validity of the signalled status change;
- Means for updating the status of the object (X) in response to the receipt of a locally valid status change message (102, 104, 106); and
- Means for determining a component with valid status of the object (X) as well as means for receiving the status of the object (X) from this component in response to the receipt of a locally invalid status change message.

8. System according to claim 7, in which the means to signal the change of the status of the object (X) include means for transmission of the status change message (102, 104, 106) by means of an unsecured multicast.

9. System according to one of the claims 7 or 8, in which the means to signal the change to the status of the object (X) include means for creating status change messages (102, 104, 106) to which at least one consecutive status change message identifier (StChID), one identifier of the status-changing component (StOwn) and one local message identifier (MID) of the sending component is assigned.

10. System according to claim 9 of which the components (A, B, C, D) have the following features:
- Means for storing a local status change message identifier (StChID), which corresponds to the status change message identifier (StChID) of the last status change message received by or sent by the relevant component;
- Means for comparing the local status change message identifier (StChID) with the status change message identifier (StChID) of a received status change message (102, 104, 106), in order to check the local validity of the status change; and
- Means for determining a status-defining component on inequality as well as means for redefining the status of the object (X) of all other components by the component determined.

11. System according to claim 10, in which the means for determining a status-defining component on inequality feature means for evaluating the following parameters:
Identifier of the status-changing component (StOwn), status change message identifier (StChID) and a priority assigned to the component.

12. System according to one the claims 9 or 10, of which the components (A, B, C, D) additionally feature means for requesting a copy of the entire object (X) at the component initiating the status change message in accordance with the establishment of a deviation of the local status from the system-wide status of the object (X).

13. System according to one of the claims 7 to 12, with the object (X) operating as a representative of one of the components and this representative characteristic of the object (X) being represented by an additional attribute.

## Revendications

1. Procédé de synchronisation de composantes (A, B, C, D) d'un système réparti, selon lequel le statut du système est représenté par au moins un objet (X) qui est prévu dans toutes les composantes (A, B, C, D), un changement du statut de l'objet (X) dans l'une des composantes étant signalé à toutes les autres composantes au moyen d'un message de changement de statut (102, 104, 106), suite à quoi la validité locale du changement de statut signalé est vérifiée par chacune des autres composantes, le statut des objets étant actualisé dans ces composantes si le changement de statut est valable localement, et, si le changement de statut n'est pas valable localement, la détermination d'une composante avec un statut valable de l'objet (X) étant opérée, lequel statut est envoyé au moins aux composantes avec un statut non valable de l'objet (X), suite à quoi le statut des objets est actualisé dans ces composantes.

2. Procédé selon la revendication 1, **caractérisé en ce que** les messages de changement de statut (102, 104, 106) sont transmis par multicast non sécurisé.

3. Procédé selon l'une des revendications 1 ou 2, **caractérisé en ce que** sont affectés, à chaque message de changement de statut (102, 104, 106), au moins un identificateur de message de changement de statut (StChID) continu, un identificateur de la composante changeant de statut (StOwn) et un identificateur de message (MID) local de la composante émettrice.

4. Procédé selon la revendication 3, **caractérisé en ce que** toutes les composantes recevant un message de changement de statut comparent un identificateur de message de changement de statut (StChID) respectivement local qui correspond à l'identificateur de message de changement de statut (StChID) du dernier message de changement de statut reçu ou émis au niveau de la composante respective avec l'identificateur de message de changement de statut (StChID) du message de changement de statut reçu (102, 104, 106) pour vérifier la validité locale du changement de statut signalé et **en ce que**, en cas d'inégalité, il est procédé à la détermination d'une composante déterminant le statut, par laquelle est défini nouvellement le statut de l'objet (X) de toutes les autres composantes.

5. Procédé selon la revendication 4, **caractérisé en ce que** la détermination de la composante déterminant le statut est opérée à partir de l'identificateur de la composante changeant de statut (StOwn), de l'identificateur de message de changement de statut (StChID) et d'une priorité affectée aux composantes.

6. Procédé selon l'une des revendications 4 ou 5, **caractérisé en ce qu'**une copie de l'objet total (X) est demandée auprès de la composante émettant le message de changement de statut par des composantes au niveau desquelles il est constaté, à partir de la comparaison, que le statut local de l'objet (X) ne correspond pas au statut actuel.

7. Système distribué, comprenant des composantes (A, B, C, D), dont le statut est représenté par au moins un objet (X), lequel est présent dans toutes les composantes (A, B, C, D), chaque composante présentant les moyens suivants:
- des moyens pour signaliser un changement du statut de l'objet (X) à toutes les autres composantes au moyen d'un message de changement de statut (102, 104, 106);
- des moyens pour vérifier la validité locale du changement de statut signalé;
- des moyens pour actualiser le statut de l'objet (X) en réaction à la réception d'un message de changement de statut valable localement (102, 104, 106) et
- des moyens pour déterminer une composante avec un statut valable de l'objet (X) ainsi que des moyens pour recevoir le statut de l'objet (X) de cette composante en réaction à la réception d'un message de changement de statut non valable localement.

8. Système selon la revendication 7, dans lequel les moyens pour signaler le changement du statut de l'objet (X) comprennent des moyens de transmission des messages de changement de statut (102, 104, 106) par multicast non sécurisé.

9. Procédé selon l'une des revendications 7 ou 8, dans lequel les moyens pour signaler le changement du statut de l'objet (X) comprennent des moyens pour générer des messages de changement de statut (102, 104, 106) auxquels sont affectés au moins un identificateur de message de changement de statut (StChID) continu, un identificateur de la composante changeant de statut (StOwn) et un identificateur de message (MID) local de la composante émettrice.

10. Système selon la revendication 9, dont les composantes (A, B, C, D) présentant en outre les moyens suivants:
- des moyens de stockage d'un identificateur de message de changement de statut (StChID) respectivement local qui correspond à l'identificateur de message de changement de statut (StChID) du dernier message de changement de statut reçu ou émis au niveau de la composante respective;
- des moyens pour comparer l'identificateur de message de changement de statut (StChID) local avec l'identificateur de message de changement de statut (StChID) d'un message de changement de statut reçu (102, 104, 106) pour vérifier la validité locale du changement de statut signalé et
- des moyens pour déterminer une composante déterminant le statut en cas d'inégalité ainsi que des moyens pour définir nouvellement le statut de l'objet (X) de toutes les autres composantes par la composante déterminée.

11. Système selon la revendication 10, dans lequel les moyens pour déterminer une composante déterminant le statut, en cas d'inégalité, présentent des moyens pour évaluer les paramètres suivants: identificateur de la composante changeant de statut (StOwn), identificateur de message de changement de statut (StChID) et une priorité affectée aux composantes.

12. Système selon l'une des revendications 9 ou 10, dont les composantes (A, B, C, D) présentent en outre des moyens pour demander une copie de l'objet total (X) au niveau de la composante émettant le message de changement de statut en réaction à la constatation d'un écart du statut local par rapport au statut de l'objet (X) à l'échelle du système.

13. Système selon l'une des revendications 7 à 12, l'objet (X) agissant en tant que représentant de l'une des composantes et cette caractéristique de représentation de l'objet (X) étant représentée par un attribut additionnel.
